# EUROPÄISCHE PATENTSCHRIFT

(11) **EP 4 241 548 B1**
(45) Veröffentlichungstag und Bekanntmachung des Hinweises auf die Patenterteilung: **02.12.2026**
(21) Anmeldenummer: 22401024.9
(22) Anmeldetag: 06.09.2022
(51) Int. Cl.: A01C 7/08

(54) **VERTEILERKOPF FÜR EINE LANDWIRTSCHAFTLICHE AUSBRINGMASCHINE UND AUSBRINGMASCHINE ZUM VERTEILEN VON MATERIAL**
DISTRIBUTION HEAD FOR AN AGRICULTURAL APPLICATION MACHINE AND APPLICATION MACHINE FOR DISTRIBUTING MATERIAL
TÊTE DE DISTRIBUTION POUR UNE MACHINE DE DISTRIBUTION AGRICOLE ET MACHINE DE DISTRIBUTION DE MATÉRIAU

(30) Priorität: 11.03.2022 DE 102022105720
(43) Veröffentlichungstag der Anmeldung: 13.09.2023
(73) Patentinhaber: Amazonen-Werke H. Dreyer SE & Co. KG, 49205 Hasbergen (DE)
(72) Erfinder: Bruns, Helmut, 27804 Berne (DE); Wien, Thomas, 28816 Stuhr (DE); Radeke, Jan Philipp, 27211 Bassum (DE); Flucke, Jan, 27798 Hude (DE); Funke, Oliver, 48477 Hörstel (DE)

(56) Entgegenhaltungen:
- EP-A1- 3 417 688
- EP-A2- 0 799 560
- EP-B1- 3 372 065
- DE-A1- 102020 106 966

## Beschreibung

Die Erfindung betrifft einen Verteilerkopf für eine landwirtschaftliche Ausbringmaschine nach dem Oberbegriff des Patentanspruchs 1 und eine landwirtschaftliche Ausbringmaschine nach dem Oberbegriff des Patentanspruchs 10.

Eine derartige Ausbringmaschinen ist in EP 3 417 688 A1 offenbart.

Landwirtschaftliche Ausbringmaschinen, wie beispielsweise Sämaschinen, sind häufig mit einer als Verteilerkopf ausgebildeten Verteileinrichtung ausgestattet, bei welcher körniges Material über eine Hauptförderleitung, beispielsweise ein Steigrohr, in einen Verteilbereich des Verteilerkopfes eingeleitet wird. Das in den Verteilerkopf eingeleitete körnige Material wird dann mehreren Ausbringkanälen zugeleitet, über welche das körnige Material in Ausbringleitungen eingeleitet wird, wobei jede Ausbringleitung zu einer Ablageeinrichtung, beispielsweise einem Säschar, führt.

Entsprechende Verteilerköpfe weisen häufig auch Rückführeinrichtungen auf, über welche Rückführströmungen an körnigem Material aus den Ausbringkanälen in die Hauptförderleitung zurückführbar sind. Gleichzeitig erlauben Luftabführströmungsbereiche der Rückführeinrichtungen das Einleiten von aus einer Rückführströmung abgeschiedenen Luft in einen Ausbringkanal oder eine Ausbringleitung, damit die Menge an in die Hauptförderleitung zurückgeführter Luft nicht zu einem Strömungsabriss in der Hauptförderleitung führt. Ferner wird so vermieden, dass die Förderung von körnigem Material infolge der Absenkung des Volumenstroms zum Erliegen kommt, was eine Blockade der Hauptförderleitung zur Folge hätte.

Verteilerköpfe mit Rückführeinrichtungen, welche einen Materialrückführströmungsbereich und einen Luftabführströmungsbereich umfassen, sind beispielsweise aus den Druckschriften WO 2017/055266 A1 und EP 3 372 065 B1 bekannt.

Diese und andere Verteilerkopfkonstruktionen weisen jedoch eine eingeschränkte Abscheideleistung auf, sodass der Anteil an aus den Rückführströmungen abgeschiedener Luft für einige Anwendungsfälle nicht ausreichend ist.

Die der Erfindung zugrundeliegende Aufgabe besteht also darin, die Luftabscheidung in Rückführeinrichtungen eines Verteilerkopfes weiter zu verbessern.

Die Aufgabe wird gelöst durch einen Verteilerkopf der eingangs genannten Art mit den Merkmalen des Anspruchs 1, wobei bei dem erfindungsgemäßen Verteilerkopf der Materialrückführströmungsbereich und der Luftabführströmungsbereich der jeweiligen Rückführeinrichtungen entlang einer Abscheidestrecke derart pneumatisch miteinander verbunden sind, dass Luft aus einer den Materialrückführströmungsbereich durchströmenden Rückführströmung entlang der Abscheidestrecke in den Luftabführströmungsbereich abscheidbar ist.

Der Materialrückführströmungsbereich und der Luftabführströmungsbereich sind also nicht, wie bisher üblich, durch eine Kanal- oder Leitungsbewandung pneumatisch voneinander getrennt, sondern entlang einer Abscheidestrecke pneumatisch miteinander verbunden, sodass entlang der Abscheidestrecke eine Luftabscheidung aus der Rückführströmung erfolgt. Die Abscheidestrecke weist vorzugsweise eine Länge von zumindest 10mm, weiter bevorzugt eine Länge von zumindest 20mm, besonders bevorzugt eine Länge von zumindest 30mm, auf. Der für die Luftabscheidung zur Verfügung stehende Strömungsbereich wird durch das Vorsehen einer Abscheidestrecke erheblich vergrößert. Der für die Luftabscheidung zur Verfügung stehende Abscheidezeitraum wird ebenfalls deutlich verlängert, weil eine Luftabscheidung während des Durchströmens der gesamten Abscheidestrecke möglich ist. Insgesamt wird die Abscheideleistung erheblich gesteigert, sodass der erfindungsgemäße Verteilerkopf auch in Einsatzbereichen verwendet werden kann, in welchen eine ausgeprägte Luftabscheidung für den fehlerfreien Betrieb des Verteilerkopfes erforderlich ist.

Entlang der Materialrückführströmungsbereiche der Rückführeinrichtungen verläuft vorzugsweise jeweils ein Materialrückführpfad. Der Materialrückführpfad verbindet vorzugsweise einen Ausbringkanal mit der Hauptförderleitung, sodass das rückgeführte Material wieder in die Hauptförderleitung eingeleitet werden kann. Entlang der Luftabführströmungsbereiche verlaufen vorzugsweise Luftabführpfade, über welche die abgeschiedene Luft jeweils einem Ausbringkanal und/oder einer Ausbringleitung zuleitbar ist. Entlang der Abscheidestrecke kann Luft aus dem Materialrückführpfad in den Luftabführpfad strömen und über den Luftabführpfad einem Ausbringkanal und/oder einer Ausbringleitung zugeleitet werden.

Der Materialrückführströmungsbereich und der Luftabführströmungsbereich gehen vorzugsweise ineinander über, wobei der Materialrückführströmungsbereich und der Luftabführströmungsbereich über einen Kantenverlauf geometrisch voneinander getrennt sind. In dem Materialrückführströmungsbereich und dem Luftabführströmungsbereich bilden sich vorzugsweise Strömungen in entgegengesetzte Richtungen aus.

Die Hauptförderleitung kann eine aufrechte Steigleitung, beispielsweise ein Steigrohr, sein.

Der Verteilerkopf wird dadurch vorteilhaft weitergebildet, dass der Materialrückführströmungsbereich und der Luftabführströmungsbereich der jeweiligen Rückführeinrichtungen entlang der Abscheidestrecke bewandungsfrei voneinander abgegrenzt sind. Der Materialrückführströmungsbereich und der Luftabführströmungsbereich teilen sich einen gemeinsamen Strömungsraum innerhalb der Rückführeinrichtungen. Dadurch, dass der Materialrückführströmungsbereich und der Luftabführströmungsbereich bewandungsfrei voneinander abgegrenzt sind, bleibt eine luftführende Verbindung zwischen dem Materialrückführströmungsbereich und dem Luftabführströmungsbereich stets vorhanden. Der Materialrückführströmungsbereich und der Luftabführströmungsbereich können entlang der Abscheidestrecke derart pneumatisch miteinander verbunden sein, dass das körnige Material nur aufgrund der sich ausbildenden Strömungen nicht von dem Materialrückführströmungsbereich in den Luftabführströmungsbereich gelangt. Alternativ kann zwischen dem Materialrückführströmungsbereich und dem Luftabführströmungsbereich eine luftdurchlässige Trennvorrichtung, beispielsweise ein Gitter oder ein Sieb, angeordnet sein, welches von dem körnigen Material nicht passiert werden kann.

Erfindungsgemäß umläuft der Materialrückführströmungsbereich zumindest abschnittsweise, insbesondere spiralförmig, um den Luftabführströmungsbereich. Der Materialrückführströmungsbereich bildet eine den Luftabführströmungsbereich umschlingende Wicklung oder Außenhelix. Der Materialrückführströmungsbereich läuft beispielsweise schraubenförmig um den Luftabführströmungsbereich um. Die Materialströmung innerhalb des Materialrückführströmungsbereichs befindet sich somit im Windschatten der Luftströmung im Luftabführströmungsbereich. Die Rückführeinrichtungen wirken also wie Fliehkraftabscheider bzw. Zyklone. Durch den umlaufenden Materialrückführströmungsbereich wird die Rückführströmung in Drehbewegung versetzt, sodass die Zentrifugalkraft zur Luftabscheidung genutzt wird. Der Materialrückführströmungsbereich kann eine sich im Verlauf der Windung verändernde Kontur aufweisen.

In einer anderen bevorzugten Ausführungsform des erfindungsgemäßen Verteilerkopfes ist der Strömungsquerschnitt des Luftabführströmungsbereichs größer als der Strömungsquerschnitt des Ausbringkanals und/oder der Strömungsquerschnitt der Ausbringleitung. Bei veränderlichen Strömungsquerschnitten ist der gemittelte Strömungsquerschnitt des Luftabführströmungsbereichs größer als der gemittelte Strömungsquerschnitt des Ausbringkanals und/oder der gemittelte Strömungsquerschnitt der Ausbringleitung. Die Strömungsgeschwindigkeit entlang des Luftabführströmungsbereichs wird somit reduziert. Dies reduziert das Risiko, dass körniges Material aus dem Materialrückführströmungsbereich aufgrund einer Sogwirkung in den Luftabführströmungsbereich gelangt.

In einer weiteren bevorzugten Ausführungsform des erfindungsgemäßen Verteilerkopfes erstrecken sich der Materialrückführströmungsbereich und der Luftabführströmungsbereich abschnittsweise entlang von separaten Leitungsabschnitten. Der Materialrückführströmungsbereich und der Luftabführströmungsbereich sind abschnittsweise durch eine Leitungsbewandung voneinander getrennt. In einem Leitungsbereich, welcher den Einlass des Materialrückführströmungsbereichs und den Auslass des Luftabführströmungsbereichs umfasst, erstrecken sich der Materialrückführströmungsbereich und der Luftabführströmungsbereich entlang von separaten Leitungsabschnitten.

In einer Weiterbildung wird ferner der Verteilerkopf durch einen, insbesondere umlaufenden, Rückführsammelbereich weitergebildet, welcher mit der Hauptförderleitung verbunden ist und in welchen mehrere oder sämtliche Materialrückführströmungsbereiche münden. Innerhalb des Rückführsammelbereichs werden also mehrere Rückführströmungen zusammengeführt, bevor die Einleitung in die Hauptförderleitung erfolgt. Der Rückführsammelbereich kann beispielsweise als Rückführtrichter ausgebildet sein.

In einer anderen bevorzugten Ausführungsform des erfindungsgemäßen Verteilerkopfes münden die Materialrückführströmungsbereiche schräg in den Rückführsammelbereich ein, sodass sich in dem Rückführsammelbereich vorzugsweise eine wirbelförmige Materialströmung ausbildet. Der Materialrückführpfad mündet also schräg in den Rückführsammelbereich. Der Winkel zwischen dem Materialrückführpfad und einer Horizontalachse liegt im Übergangsbereich von dem Materialrückführströmungsbereich in den Rückführsammelbereich in einem Bereich zwischen 10 und 80 Grad, vorzugweise in einem Bereich zwischen 20 und 60 Grad. Bei Fahrten am Hang kommt es zu einer Neigung der Ausbringmaschine. Aufgrund der Neigung besteht das Risiko, dass der Rückführsammelbereich einseitig vollläuft, nämlich auf der hangabwärtsliegenden Seite. Dieses Risiko wird minimiert, indem die Materialrückführströmungsbereiche bzw. die Rückführströmungspfade derart schräg in den Rückführsammelbereich münden, dass sich eine umlaufende wirbelförmige Materialströmung innerhalb des Materialrückführströmungsbereichs ausbildet.

Es ist ferner ein Verteilerkopf mit einer Umlenkeinrichtung bevorzugt, welche in eine Durchleitungsstellung und eine Rückführstellung verbringbar ist. Ein beweglicher Umlenkkörper der Umlenkeinrichtung ist vorzugsweise dazu eingerichtet, in der Durchleitungsstellung einen Durchgang vom Ausbringkanal in den Materialrückführströmungsbereich zu sperren. Alternativ oder zusätzlich ist der bewegliche Umlenkkörper der Umlenkeinrichtung dazu eingerichtet, in der Rückführstellung den Durchgang vom Ausbringkanal in den Materialrückführströmungsbereich freizugeben. Der Umlenkkörper kann eine bewegliche, insbesondere schwenkbare, Umlenkklappe sein. Die Umlenkkörper der jeweiligen Umlenkeinrichtungen können mit einem Antrieb, beispielsweise einem elektrischen Antrieb, verbunden sein. Über eine Ansteuerung der Antriebe kann wahlweise die Durchleitungsstellung oder die Rückführstellung an der Umlenkeinrichtung eingestellt werden.

Es ist ferner ein Verteilerkopf vorteilhaft, bei welchem der Ausbringkanal und der Luftabführströmungsbereich dauerhaft und/oder permanent pneumatisch miteinander verbunden sind. Der Verteilerkopf weist vorzugsweise keine Sperreinrichtung auf, über welche die dauerhafte und/oder permanente pneumatische Verbindung zwischen dem Ausbringkanal und dem Luftabführströmungsbereich unterbrochen werden kann.

In einer weiteren bevorzugten Ausführungsform des erfindungsgemäßen Verteilerkopfes ist der Umlenkkörper der Umlenkeinrichtung dazu eingerichtet, in der Durchleitungsstellung den freien Strömungsquerschnitt in dem Durchgang vom Ausbringkanal in den Luftabführströmungsbereich zu verkleinern. Der Umlenkkörper weist vorzugsweise einen Abdeckflügel auf, mittels welchem der Durchgang vom Ausbringkanal in den Luftabführströmungsbereich abdeckbar ist. Der Abdeckflügel füllt den Durchgang vom Ausbringkanal in den Luftabführströmungsbereich, beispielsweise aufgrund einer Ausnehmung, nicht vollständig aus, sodass eine dauerhafte pneumatische Verbindung zwischen dem Ausbringkanal und dem Luftabführströmungsbereich gewährleistet wird. Bei aktiver Materialablage strömt das körnige Material durch den Ausbringkanal und die Ausbringleitung zu einer Ablageeinrichtung, beispielsweise einem Säschar. Durch eine Düse in der Hauptförderleitung kann es zu einer Sogströmung von dem Ausbringkanal in den Materialrückführströmungsbereich und/oder den Luftabführströmungsbereich kommen. Körniges Material kann aufgrund des Sogs versehentlich in den Luftabführströmungsbereich einströmen, wodurch die Ausbringleistung sinkt. Der Abdeckflügel wirkt diesem Effekt entgegen und fungiert somit als Strömungsdrossel. Der Umlenkkörper kann eine Drosselwippe sein. Der Abdeckflügel dient als Strömungswiderstand, sodass der durch den von der Düse in der Hauptförderleitung verursachte Sog keine ausreichende Saugwirkung verursacht, um körniges Material in den Luftabführströmungsbereich anzusaugen. Durch die Ausnehmung bzw. die Ausnehmungen in dem Abdeckflügel kann körniges Material hindurchtreten.

In einer anderen bevorzugten Ausführungsform des erfindungsgemäßen Verteilerkopfes umfassen die Rückführeinrichtungen jeweils zumindest zwei Schalenteile, insbesondere Halbschalenteile, wobei die zumindest zwei Schalenteile jeweils eine Rückführeinrichtung bilden. Vorzugsweise sind die Rückführeinrichtungen jeweils in zwei Halbschalen geteilt. Die Rückführeinrichtungen sind vorzugsweise entlang ihrer Längsrichtung geteilt. Vorzugsweise umfassen beide Schalenteile zumindest abschnittsweise einen Teil des Luftabführströmungsbereichs und/oder einen Teil des Materialrückführströmungsbereichs. Vorzugsweise sind die Schalenteile reversibel zerstörungsfrei lösbar, beispielsweise mittels Schrauben, miteinander verbunden. Dadurch, dass sich die Rückführeinrichtungen aus zerstörungsfrei lösbaren Schalenteilen zusammensetzen, können der Luftabführströmungsbereich und der Materialrückführströmungsbereich geöffnet und mögliche Verstopfungen beseitigt werden. Zudem werden die Fertigung und die Montage durch die Teilung in zwei Schalenteile vereinfacht.

In einer Weiterbildung des erfindungsgemäßen Verteilerkopfes ist in dem Luftabführströmungsbereich der Rückführeinrichtungen ein Abführströmungskörper angeordnet, wobei sich der Abführströmungskörper vorzugsweise zumindest abschnittsweise entlang der Abscheidestrecke der jeweiligen Rückführeinrichtungen im Luftabführströmungsbereichs erstreckt. Der Abführströmungskörper ist vorzugsweise als länglicher Körper, beispielsweise als Stange oder Stab, ausgebildet. Vorzugsweise ist der Abführströmungskörper zylinderförmig mit einem runden Querschnitt ausgebildet. Der Abführströmungskörper kann aus einem Vollmaterial oder als Hohlkörper, beispielsweise als Röhrchen, ausgebildet sein. Der Abführströmungskörper kann aus einem metallischen Werkstoff, beispielsweise Stahl oder Aluminium, oder aus einem Kunststoff ausgebildet sein. Der Abführströmungskörper kann sich über den gesamten Luftabführströmungsbereich der Rückführeinrichtung entlang der Abscheidestrecke erstrecken. Vorzugsweise ist der Abführströmungskörper im Querschnitt mittig, insbesondere im Zentrum, des Luftabführströmungsbereichs angeordnet. Vorzugsweise erstreckt sich der Abführströmungskörper parallel zu einer Längsachse der Rückführeinrichtung. Der Abführströmungskörper kann zumindest abschnittsweise in seiner Längserstreckung im Inneren der Rückführeinrichtung mit der Rückführeinrichtung verbunden und an der Rückführeinrichtung befestigt sein. Vorzugsweise ist der Abführströmungskörper in seinem oberen und/oder in seinem unteren Endbereich an der Rückführeinrichtung, insbesondere reversibel zerstörungsfrei, befestigt. Der Abführströmungskörper ist vorzugsweise form- und/oder kraftschlüssig, beispielsweise mittels einer Klemmverbindung oder mittels Schrauben, mit der Rückführeinrichtung verbunden sein. Der Abführströmungskörper kann zudem stoffschlüssig mit der Rückführeinrichtung verbunden, beispielsweise verklebt oder verschweißt oder von dem Material der Rückführeinrichtung zumindest teilweise umschlossen, sein.

Vorzugsweise wird der Abführströmungskörper zumindest abschnittsweise entlang seiner Außenfläche von Luft umströmt. Dadurch, dass ein Abführströmungskörper in dem Luftabführströmungsbereich der Rückführeinrichtungen angeordnet ist, wird das Strömungsverhalten von durch den Luftabführströmungsbereich strömender Luft optimiert. Ein optimiertes Strömungsverhalten der durch den Luftabführströmungsbereich strömenden Luft hat eine verbesserte Luftabscheidung in den Rückführeinrichtungen des Verteilerkopfes zur Folge.

Die der Erfindung zugrundeliegende Aufgabe wird ferner durch eine landwirtschaftliche Ausbringmaschine der eingangs genannten Art gelöst, wobei der Verteilerkopf der erfindungsgemäßen landwirtschaftlichen Ausbringmaschine nach einer der vorstehend beschriebenen Ausführungsformen ausgebildet ist. Hinsichtlich der Vorteile und Modifikationen der erfindungsgemäßen Ausbringmaschine wird auf die Vorteile und Modifikationen des erfindungsgemäßen Verteilerkopfes verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Maschinenverbund mit einer erfindungsgemäßen Ausbringmaschine in einer perspektivischen Darstellung;
- Fig. 2: ein Ausführungsbeispiel des erfindungsgemäßen Verteilerkopfes in einer Seitenansicht;
- Fig. 3: den in der Fig. 2 abgebildeten Verteilerkopf mit angedeuteten Ausbringleitungen in einer Schnittdarstellung;
- Fig. 4: den in der Fig. 2 abgebildeten Verteilerkopf in einer weiteren Schnittdarstellung;
- Fig. 5: eine Rückführeinrichtung eines erfindungsgemäßen Verteilerkopfes in einer Schnittdarstellung;
- Fig. 6: eine Rückführeinrichtung eines weiteren erfindungsgemäßen Verteilerkopfes in einer Schnittdarstellung;
- Fig. 7: eine zwei Schalenteilen umfassende Rückführeinrichtung mit einem im Luftabführströmungsbereich der Rückführeinrichtung angeordneten Abführströmungskörper in einer seitlichen Schnittdarstellung; und
- Fig. 8: die zwei Schalenteilen und einen Abführströmungskörper umfassende Rückführeinrichtung aus der Fig. 7 in einer Schnittdarstellung von unten.

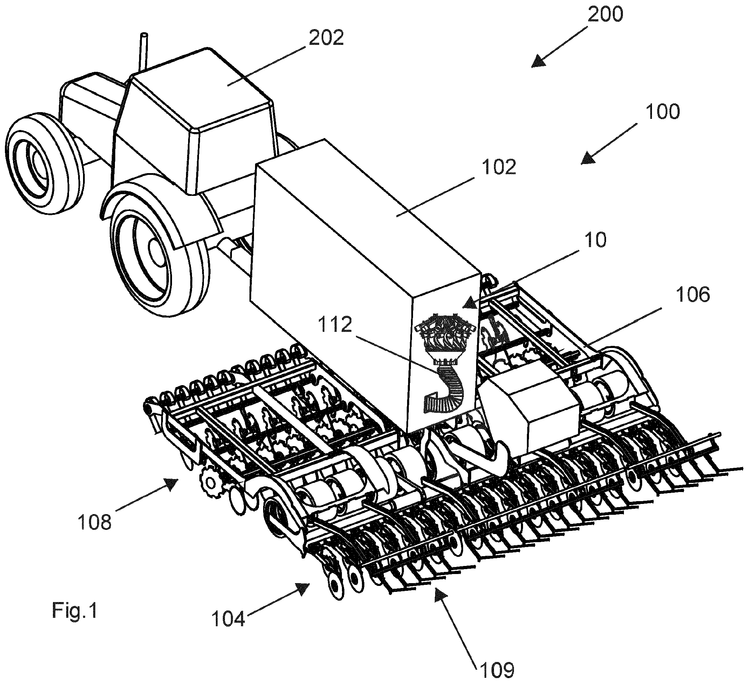

Die Fig. 1 zeigt einen Maschinenverbund 200 mit einem als Traktor ausgebildeten landwirtschaftlichen Zugfahrzeug 202 und einer als Sämaschine ausgebildeten landwirtschaftlichen Ausbringmaschine 100. Die landwirtschaftliche Ausbringmaschine 100 ist in der dargestellten Ausführungsform als gezogene Maschine ausgebildet. In anderen Ausführungsformen kann die landwirtschaftliche Ausbringmaschine 100 auch als getragene Maschine ausgebildet sein, sodass das Fahrzeug 202 als Trägerfahrzeug fungiert.

Die landwirtschaftliche Ausbringmaschine 100 umfasst einen Vorratsbehälter 102 zum Bevorraten von körnigem Material, beispielsweise Saatgut und/oder Dünger. Das in dem Vorratsbehälter 102 bevorratete körnige Material wird über eine Zuführleitung 112 einem Verteilerkopf 10 zugeleitet. Der Verteilerkopf 10 verteilt das körnige Material auf eine Mehrzahl von Ausbringleitungen 110 (in der Fig. 1 sind die Ausbringleitungen 110 ausgeblendet), wobei die Ausbringleitungen 110 mit Ablageeinrichtungen 104 der landwirtschaftlichen Ausbringmaschine 100 verbunden sind. Über die Ablageeinrichtungen 104 wird das körnige Material auf eine landwirtschaftliche Nutzfläche abgelegt. Die Ablageeinrichtungen 104 können beispielsweise Säschare sein. Die Ablageeinrichtungen 104 sind an einem Maschinenrahmen 106 der landwirtschaftlichen Ausbringmaschine 100 angeordnet. An dem Maschinenrahmen 106 sind ferner Bodenbearbeitungswerkzeuge 108 befestigt. Die landwirtschaftliche Ausbringmaschine 100 weist mehrere Querreihen von vorlaufenden Bodenbearbeitungswerkzeugen 108 auf, welche in Fahrtrichtung vor den Ablageeinrichtungen 104 angeordnet sind. Ferner umfasst die landwirtschaftliche Ausbringmaschine 100 mehrere Querreihen von nachlaufenden Bodenbearbeitungswerkzeugen 109, welche in Fahrtrichtung hinter den Ablageeinrichtungen 104 angeordnet sind.

Der Verteilerkopf 10 ist mit Umlenkeinrichtungen 38 ausgestattet, über welche die Einleitung von körnigem Material in die zu den Ablageeinrichtungen 104 führenden Ausbringleitungen 110 temporär unterbrochen werden kann, um die Ausbringung des körnigen Materials auf die landwirtschaftliche Nutzfläche reihenspezifisch, bereichsspezifisch oder über die gesamte Breite der landwirtschaftlichen Ausbringmaschine 100 temporär zu unterbrechen.

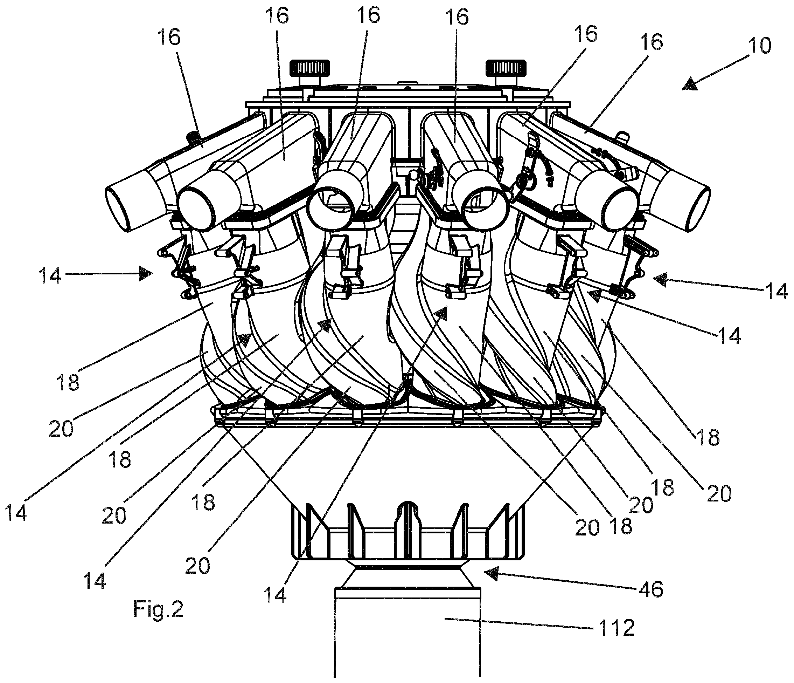

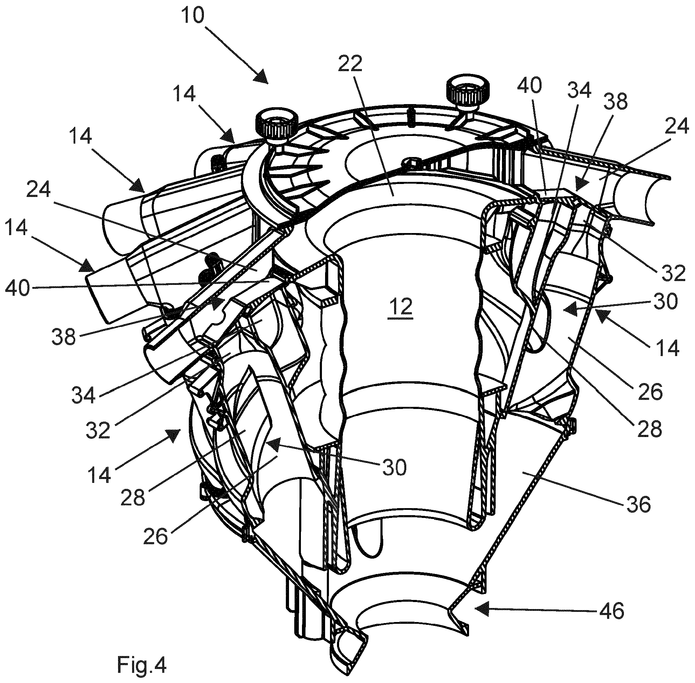

Die Fig. 2 bis 4 zeigen einen Verteilerkopf 10 mit einer Hauptförderleitung 12. Die Hauptförderleitung 12 schließt sich an die Zuführleitung 112 der landwirtschaftlichen Ausbringmaschine 100 an. Über die Hauptförderleitung 12 wird das körnige Material in einen Verteilbereich 22 des Verteilerkopfes 10 eingeleitet. Von dem Verteilbereich 22 gehen mehrere Ausbringkanäle 24 ab, über welche das körnige Material in zu den Ablageeinrichtungen 104 führende Ausbringleitungen 110 eingeleitet wird.

An den Ausbringkanälen 24 des Verteilerkopfes 10 sind Umlenkeinrichtungen 38 angeordnet, welche jeweils in eine Durchleitungsstellung und eine Rückführstellung verbringbar sind. Die Umlenkeinrichtungen 38 weisen jeweils einen als bewegliche Umlenkklappe ausgebildeten Umlenkkörper 40 auf. In der Durchleitungsstellung ist der Ausbringkanal 24 freigegeben und ein Durchgang vom Ausbringkanal über den Leitungsabschnitt 34 in einen Materialrückführströmungsbereich 28 ist gesperrt. In der Rückführstellung ist der Umlenkkörper 40 derart verschwenkt, dass der Durchgang vom Ausbringkanal 24 über den Leitungsabschnitt 34 in den Materialrückführströmungsbereich 28 freigegeben ist. In der Rückführstellung der Umlenkeinrichtung 38 wird das körnige Material also über den Leitungsabschnitt 34 und den Materialrückführströmungsbereich 28 mittels einer Rückführströmung zurück in die Hauptförderleitung 12 geführt.

Der Materialrückführströmungsbereich 28 ist Bestandteil einer Rückführeinrichtung 14 des Verteilerkopfes 10. Die Rückführeinrichtung 14 umfasst ferner einen Luftabführströmungsbereich 26. Über den Luftabführströmungsbereich 26 kann aus der Rückführströmung abgeschiedene Luft in den Ausbringkanal 24 zum Ausblasen über die Ausbringleitung 110 zurückgeleitet werden. Auf diese Weise wird vermieden, dass eine zu große Luftmenge zurück in die Hauptförderleitung 12 zurückgeführt wird, wenn der Umlenkkörper 40 der Umlenkeinrichtung 38 den Ausbringkanal 24 in der Rückführstellung der Umlenkeinrichtung 38 blockiert.

Der Materialrückführströmungsbereich 28 läuft spiralförmig um den Luftabführströmungsbereich 26 herum. Der Materialrückführströmungsbereich 28 bildet eine den Luftabführströmungsbereich 26 umschlingende Wicklung oder Außenhelix. Der Materialrückführströmungsbereich 28 und der Luftabführströmungsbereich 26 sind entlang einer spiralförmig verlaufenden Abscheidestrecke 30 bewandungsfrei voneinander abgegrenzt. Die Strömungsräume des Materialrückführströmungsbereichs 28 und des Luftabführströmungsbereichs 26 sind entlang der Abscheidestrecke 30 pneumatisch miteinander verbunden und gehen entlang der Abscheidestrecke 30 ineinander über. Zwischen dem Materialrückführströmungsbereich 28 und dem Luftabführströmungsbereich 26 besteht ein Kantenverlauf an dem die Luft abgeschieden werden kann. Es handelt sich bei dem Kantenverlauf insofern um eine Abscheidekante an der die überschüssige Luft entweicht und von dem rückgeführten Material getrennt wird.

Die pneumatische Verbindung zwischen dem Materialrückführströmungsbereich 28 und dem Luftabführströmungsbereich 26 entlang der Abscheidestrecke 30 erlaubt es, dass Luft aus der den Materialrückführströmungsbereich 28 durchströmenden Rückführströmung entlang der Abscheidestrecke 30 in den Luftabführströmungsbereich 26 abgeschieden wird. Entlang der Abscheidestrecke 30 kann also Luft aus dem Materialrückführpfad, welcher sich entlang des Materialrückführströmungsbereichs 28 erstreckt, in einen Luftabführpfad, welcher sich entlang des Luftabführströmungsbereichs 26 erstreckt, strömen, sodass die abgeschiedene Luft über die Ausbringleitung 110 abgeführt werden kann. Im Nahbereich des Umlenkkörpers 40 der Umlenkeinrichtung 38 erstrecken sich der Materialrückführströmungsbereich 28 und der Luftabführströmungsbereich 26 entlang von separaten Leitungsabschnitten 32, 34. In diesem Bereich sind der Materialrückführströmungsbereich 28 und der Luftabführströmungsbereich 26 abschnittsweise durch eine Leitungsbewandung voneinander getrennt.

Der Verteilerkopf 10 umfasst ferner einen umlaufenden Rückführsammelbereich 36, welcher mit der Hauptförderleitung 12 verbunden ist und in welchen sämtliche Materialrückführströmungsbereiche 28 münden. Der Rückführsammelbereich 36 ist ein Rückführtrichter. Die Materialrückführströmungsbereiche 28 münden schräg in den Rückführsammelbereich 36 ein, sodass sich in dem Rückführsammelbereich 36 eine wirbelförmige Materialströmung ausbildet. Durch die wirbelförmige Materialströmung innerhalb des Materialrückführströmungsbereichs 28 wird vermieden, dass der Rückführsammelbereich 36 während Fahrten am Hang und einer dadurch bedingten Maschinenneigung einseitig vollläuft.

Die Ausbringkanäle 24 werden von Bewandungen 16 begrenzt. Die Luftabführströmungsbereiche 26 werden von Bewandungen 18 begrenzt. Die Materialrückführströmungsbereiche 28 werden von Bewandungen 20 begrenzt. Der mittlere Strömungsquerschnitt des Luftabführströmungsbereichs 26 ist größer als der mittlere Strömungsquerschnitt des Ausbringkanals 24 und größer als der mittlere Strömungsquerschnitt der Ausbringleitung 110. Die Strömungsgeschwindigkeit entlang des Luftabführströmungsbereichs 26 wird somit reduziert. Dies reduziert das Risiko, dass körniges Material aus dem Materialrückführströmungsbereich 28 aufgrund einer Sogwirkung in den Luftabführströmungsbereich 26 gelangt.

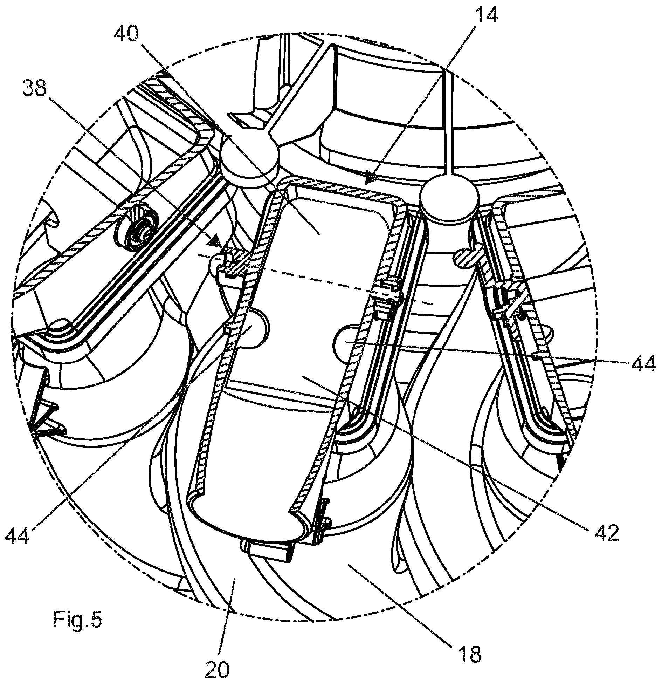

Die Fig. 5 zeigt eine Umlenkeinrichtung 38 einer Rückführeinrichtung 14. Der als Umlenkklappe ausgebildete Umlenkkörper 40 weist einen Abdeckflügel 42 auf, mittels welchem der Durchgang vom Ausbringkanal 24 in den Luftabführströmungsbereich 26 aufgrund von Ausnehmungen 44 in dem Abdeckflügel 42 nur teilweise ausgefüllt wird. Aufgrund der Ausnehmungen 44 ergibt sich eine dauerhafte pneumatische Verbindung zwischen dem Ausbringkanal 24 und dem Luftabführströmungsbereich 26. Bei aktivierter Materialablage, in welcher die Umlenkeinrichtung 38 in der Durchleitungsstellung ist, strömt das körnige Material durch den Ausbringkanal 24 und die Ausbringleitung 110 zu einer Ablageeinrichtung 104, beispielsweise einem Säschar.

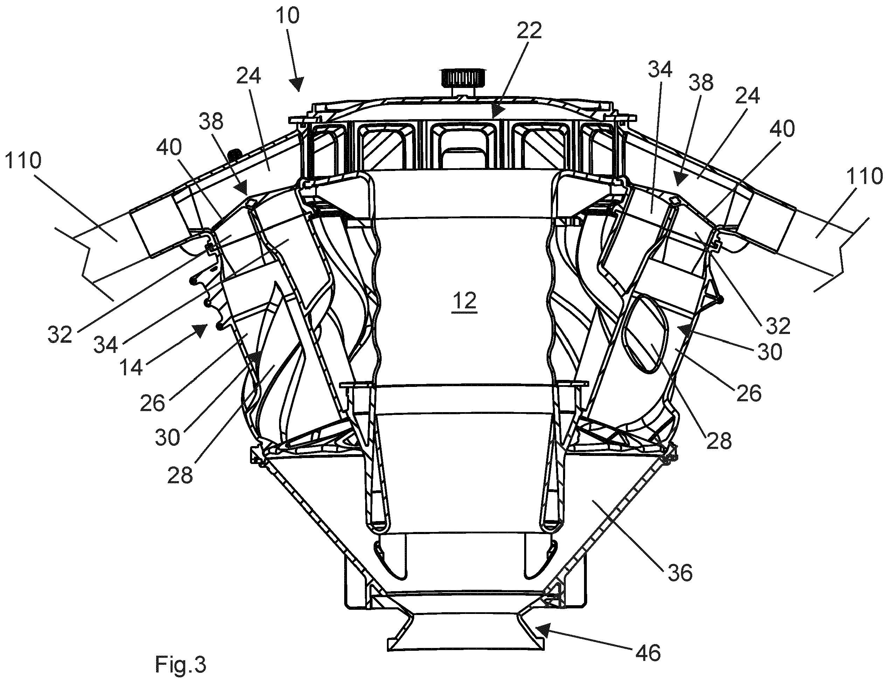

Durch eine Verengung 46 in der Hauptförderleitung 12 (vgl. Fig. 3) kann es zu einer Sogströmung von dem Ausbringkanal 24 in den Materialrückführströmungsbereich 28 und den Luftabführströmungsbereich 26 kommen. Körniges Material kann aufgrund des Sogs versehentlich in den Luftabführströmungsbereich 26 strömen, wodurch die Ausbringleistung sinkt. Der Ausnehmungen 44 aufweisende Abdeckflügel 42 des Umlenkkörpers 40 wirkt also als Strömungsdrossel. In der dargestellten Ausführungsform ist der Umlenkkörper 40 als Drosselwippe ausgebildet. Der Abdeckflügel 42 dient also als Strömungswiderstand, sodass sich durch den von der Düse 46 in der Hauptförderleitung 12 verursachten Sog keine ausreichende Saugwirkung vom Ausbringkanal 24 in den Luftabführströmungsbereich 26 ergibt, um körniges Material in den Luftabführströmungsbereich 26 anzusaugen.

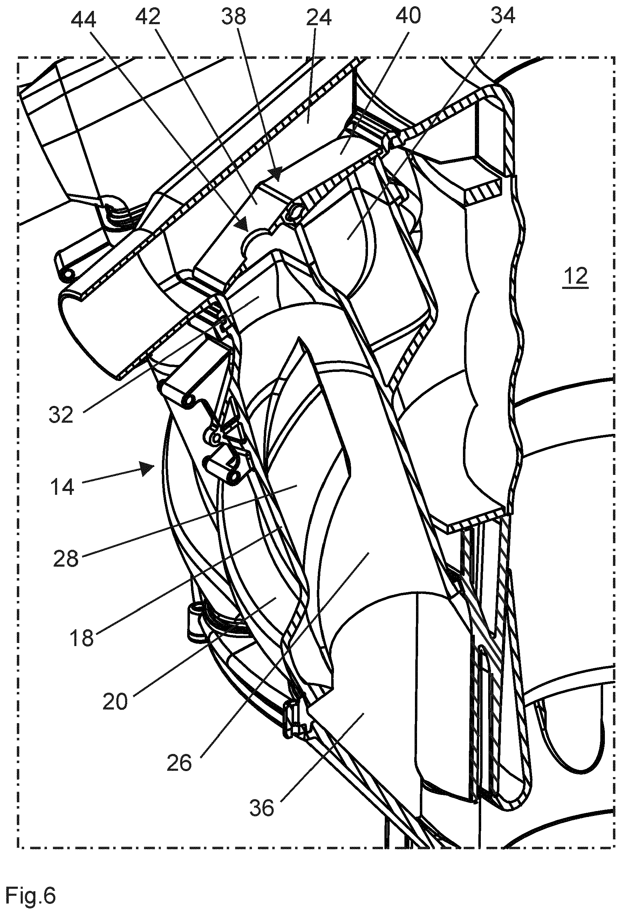

Die Fig. 6 zeigt, dass der Abdeckflügel 42 anstatt von zwei halbkreisförmigen Ausnehmungen auch eine zentrale kreisförmige Ausnehmung aufweisen kann. In anderen Ausführungsformen kann auch eine andere Anzahl von Ausnehmungen 44 in dem Abdeckflügel 42 vorhanden sein, wobei die Ausnehmungen 44 auch andere Formen aufweisen können.

Die Darstellung in der Fig. 6 zeigt, dass die Bewandung 18 des Luftabführströmungsbereichs 26 und die Bewandung 20 des Materialrückführströmungsbereichs 28 ineinander übergehen. Der Materialrückführströmungsbereich 28 läuft spiralförmig um den Luftabführströmungsbereich 26 herum, wobei der Materialrückführströmungsbereich 28 und der Luftabführströmungsbereich 26 entlang der Abscheidestrecke 30 pneumatisch miteinander verbunden und bewandungsfrei voneinander abgegrenzt sind. In anderen Ausführungsformen kann sich entlang der Abscheidestrecke 30 auch eine Trennvorrichtung, beispielsweise ein Gitter oder ein Sieb, befinden.

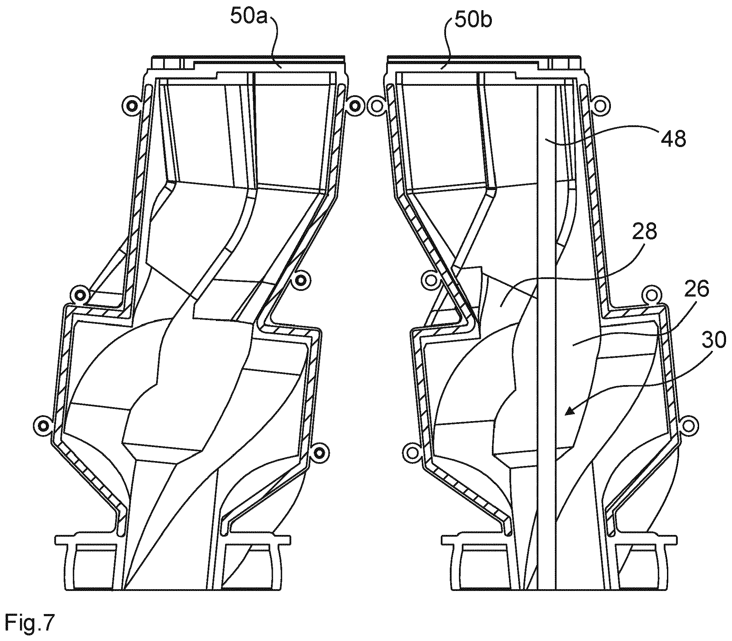

Die Fig. 7 zeigt eine Rückführeinrichtung 14, welche in ihrer Längsrichtung in zwei als Halbschalen ausgebildete Schalenteile 50a, 50b geteilt ist. Zu sehen sind jeweils die Innenseiten der Schalenteile 50a, 50b. Die Schalenteile 50a, 50b können zusammengesetzt und aneinander befestigt werden, sodass die Schalenteile 50a, 50b gemeinsam die Rückführeinrichtung 14 ausbilden. Durch die aneinander befestigten Schalenteile 50a, 50b werden außerdem der Materialrückführströmungsbereich 28 und der Luftabführströmungsbereich 26 der Rückführeinrichtung 26 ausgebildet, wobei beide Schalenteile 50a, 50b jeweils einen Teil des Materialrückführströmungsbereichs 28 und des Luftabführströmungsbereichs 26 umfassen.

Die Rückführeinrichtung 14 umfasst zudem einen Abführströmungskörper 48. Der Abführströmungskörper 48 ist als länglicher, zylinderförmiger Stab ausgebildet, welcher sich über die gesamte Ausbringstrecke 30 der Rückführeinrichtung 14 in dem Luftabführströmungsbereich 26 parallel zur Längsachse der Rückführeinrichtung 14 erstreckt. Der Abführströmungskörper 48 ist an seinem oberen Ende an dem Schalenteil 50b der Rückführeinrichtung 14 befestigt. Das untere Ende des Abführströmungskörpers 48 ist freiliegend und nicht an der Rückführeinrichtung 14 befestigt. Luft, welche aus dem Materialrückführströmungsbereich 28 mittels der Rückführeinrichtung 14 in den Luftabführströmungsbereich 26 abgeschieden wird, umströmt zumindest abschnittsweise den Abführströmungskörpers 48, wodurch das Strömungsverhalten der abgeschiedenen Luft positiv beeinflusst und somit die Luftabscheidung mittels der Rückführeinrichtung 14 verbessert wird.

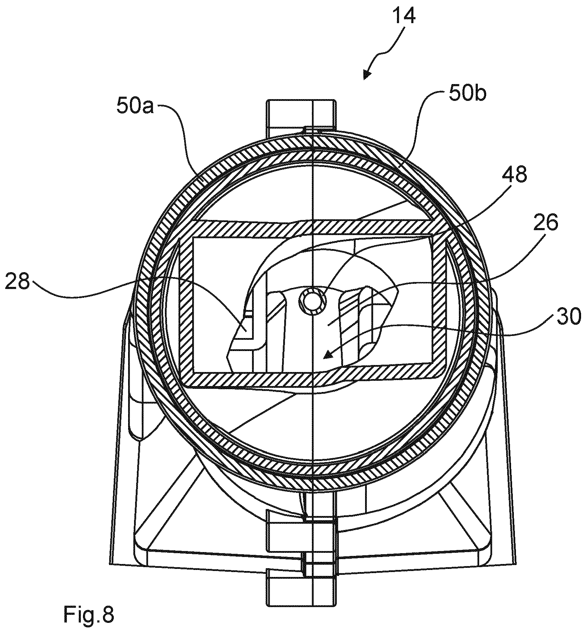

Die Fig. 8 zeigt die zwei Schalenteilen 50a, 50b umfassende Rückführeinrichtung 14 aus der Fig. 7 im zusammengesetzten Zustand in einer Ansicht von unten. Die Schalenteile 50a, 50b haben einen im Wesentlichen gleichen halbkreisförmigen Querschnitt, sodass ich im zusammengesetzten Zustand ein kreisförmiger Querschnitt am unteren Ende der Rückführeinrichtung 14 ergibt. Der Abführströmungskörpers 48 ist im Querschnitt mittig im Zentrum der Rückführeinrichtung 14 angeordnet und erstreckt sich längs im Luftabführströmungsbereich 26 entlang der Ausbringstrecke 30 in Längsrichtung der Rückführeinrichtung 14. Der Abführströmungskörpers 48 weist einen kreisförmigen Querschnitt auf und ist als Hohlzylinder ausgebildet. Der Abführströmungskörpers 48 kann zudem aus einem Vollmaterial ausgebildet sein.

### Bezugszeichenliste

- 10: Verteilerkopf
- 12: Hauptförderleitung
- 14: Rückführeinrichtungen
- 16: Bewandungen
- 18: Bewandungen
- 20: Bewandungen
- 22: Verteilbereich
- 24: Ausbringkanäle
- 26: Luftabführströmungsbereiche
- 28: Materialrückführströmungsbereiche
- 30: Abscheidestrecken
- 32: Leitungsabschnitte
- 34: Leitungsabschnitte
- 36: Rückführsammelbereich
- 38: Umlenkeinrichtungen
- 40: Umlenkkörper
- 42: Abdeckflügel
- 44: Ausnehmungen
- 46: Verengung
- 48: Abführströmungskörper
- 50a, 50b: Schalenteile

- 100: Ausbringmaschine
- 102: Vorratsbehälter
- 104: Ablageeinrichtungen
- 106: Maschinenrahmen
- 108: Bodenbearbeitungswerkzeuge
- 110: Ausbringleitungen
- 112: Zuführleitung

- 200: Maschinenverbund
- 202: Fahrzeug

## Patentansprüche

1. Verteilerkopf (10) für eine landwirtschaftliche Ausbringmaschine (100), mit
- einer Hauptförderleitung (12), über welche körniges Material in einen Verteilbereich (22) des Verteilerkopfes (10) einleitbar ist;
- mehreren Ausbringkanälen (24), welche von dem Verteilbereich (22) abgehen und über welche körniges Material in zu Ablageeinrichtungen (104) führende Ausbringleitungen (110) einleitbar ist; und
- mehreren Rückführeinrichtungen (14), welche jeweils einen Materialrückführströmungsbereich (28) und einen Luftabführströmungsbereich (26) umfassen, wobei durch den Materialrückführströmungsbereich (28) über eine Rückführströmung körniges Material aus einem Ausbringkanal (24) in die Hauptförderleitung (12) zurückführbar ist und durch den Luftabführströmungsbereich (26) aus einer Rückführströmung abgeschiedene Luft einem Ausbringkanal (24) und/oder einer Ausbringleitung (110) zuleitbar ist;
wobei der Materialrückführströmungsbereich (28) und der Luftabführströmungsbereich (26) der jeweiligen Rückführeinrichtungen (14) entlang einer Abscheidestrecke (30) derart pneumatisch miteinander verbunden sind, dass Luft aus einer den Materialrückführströmungsbereich (28) durchströmenden Rückführströmung entlang der Abscheidestrecke (30) in den Luftabführströmungsbereich (26) abscheidbar ist,
**dadurch gekennzeichnet, dass** der Materialrückführströmungsbereich (28) zumindest abschnittsweise, insbesondere spiralförmig, um den Luftabführströmungsbereich (26) umläuft.

2. Verteilerkopf (10) nach Anspruch 1,
**dadurch gekennzeichnet, dass** der Materialrückführströmungsbereich (28) und der Luftabführströmungsbereich (26) der jeweiligen Rückführeinrichtungen (14) entlang der Abscheidestrecke (30) bewandungsfrei voneinander abgegrenzt sind.

3. Verteilerkopf (10) nach einem der vorstehenden Ansprüche,
**dadurch gekennzeichnet, dass** der Strömungsquerschnitt des Luftabführströmungsbereichs (26) größer ist als der Strömungsquerschnitt des Ausbringkanals (24) und/oder der Strömungsquerschnitt der Ausbringleitung (110).

4. Verteilerkopf (10) nach einem der vorstehenden Ansprüche,
**dadurch gekennzeichnet, dass** sich der Materialrückführströmungsbereich (28) und der Luftabführströmungsbereich (26) abschnittsweise entlang von separaten Leitungsabschnitten (32, 34) erstrecken.

5. Verteilerkopf (10) nach einem der vorstehenden Ansprüche,
**gekennzeichnet durch** einen, insbesondere umlaufenden, Rückführsammelbereich (36), welcher mit der Hauptförderleitung (12) verbunden ist und in welchen mehrere oder sämtliche Materialrückführströmungsbereiche (28) münden.

6. Verteilerkopf (10) nach Anspruch 5,
**dadurch gekennzeichnet, dass** die Materialrückführströmungsbereiche (28) schräg in den Rückführsammelbereich (36) einmünden, sodass sich in dem Rückführsammelbereich (36) vorzugsweise eine wirbelförmige Materialströmung ausbildet.

7. Verteilerkopf (10) nach einem der vorstehenden Ansprüche,
**gekennzeichnet durch** Umlenkeinrichtung (38), welche in eine Durchleitungsstellung und eine Rückführstellung verbringbar ist, wobei ein beweglicher Umlenkkörper (40) der Umlenkeinrichtung (38) dazu eingerichtet ist,
- in der Durchleitungsstellung einen Durchgang vom Ausbringkanal (24) in den Materialrückführströmungsbereich (28) zu sperren; und/oder
- in der Rückführstellung den Durchgang vom Ausbringkanal (24) in den Materialrückführströmungsbereich (28) freizugeben.

8. Verteilerkopf (10) nach Anspruch 7,
**dadurch gekennzeichnet, dass** der Ausbringkanal (24) und der Luftabführströmungsbereich (26) dauerhaft und/oder permanent pneumatisch miteinander verbunden sind.

9. Verteilerkopf (10) nach Anspruch 7 oder 8,
**dadurch gekennzeichnet, dass** der Umlenkkörper (40) der Umlenkeinrichtung (38) dazu eingerichtet ist, in der Durchleitungsstellung den freien Strömungsquerschnitt in dem Durchgang vom Ausbringkanal (24) in den Luftabführströmungsbereich (26) zu verkleinern.

10. Landwirtschaftliche Ausbringmaschine (100), insbesondere Sämaschine, mit
- einem Verteilerkopf (10) zum Verteilen von körnigem Material auf mehrere Ausbringleitungen (110); und
- mehreren Ablageeinrichtungen (104), welche jeweils mit einer Ausbringleitung (110) verbunden und dazu eingerichtet sind, körniges Material auf eine landwirtschaftliche Nutzfläche abzulegen;
**dadurch gekennzeichnet, dass** der Verteilerkopf (10) nach einem der vorstehenden Ansprüche ausgebildet ist.

## Claims

1. Distributor head (10) for an agricultural spreading machine (100), comprising
- a main conveying line (12) through which granular material can be introduced into a distribution region (22) of the distributor head (10);
- a plurality of spreading channels (24) which branch off from the distribution region (22) and through which granular material can be introduced into spreading lines (110) leading to depositing devices (104); and
- a plurality of return devices (14) which each comprise a material return flow region (28) and an air discharge flow region (26), wherein granular material from a spreading channel (24) can be returned into the main conveying line (12) via a return flow through the material return flow region (28) and air separated from a return flow can be fed to a spreading channel (24) and/or to a spreading line (110) through the air discharge flow region (26);
wherein the material return flow region (28) and the air discharge flow region (26) of the respective return devices (14) are pneumatically connected to one another along a separation section (30) such that air from a return flow flowing through the material return flow region (28) can be separated along the separation section (30) into the air discharge flow area (26),
**characterized in that** the material return flow region (28) extends around the air discharge flow region (26) at least in portions, in particular helically.

2. Distributor head (10) according to claim 1,
**characterized in that** the material return flow region (28) and the air discharge flow region (26) of the respective return devices (14) are separated from one another without any walls along the separation section (30).

3. Distributor head (10) according to any of the preceding claims,
**characterized in that** the flow cross section of the air discharge flow region (26) is larger than the flow cross section of the spreading channel (24) and/or the flow cross section of the spreading line (110).

4. Distributor head (10) according to any of the preceding claims,
**characterized in that** the material return flow region (28) and the air discharge flow region (26) extend in portions along separate line portions (32, 34).

5. Distributor head (10) according to any of the preceding claims,
**characterized by** a, in particular circumferential, return collection region (36) which is connected to the main conveying line (12) and into which a plurality of or all material return flow regions (28) open.

6. Distributor head (10) according to claim 5,
**characterized in that** the material return flow regions (28) open at an angle into the return collection region (36), so that an eddy-like material flow preferably forms in the return collection region (36).

7. Distributor head (10) according to any of the preceding claims,
**characterized by** deflection device (38) which can be moved into a feed-through position and a return position, wherein a movable deflection body (40) of the deflection device (38) is designed,
- in the feed-through position, to block a through-passage from the spreading channel (24) into the material return flow region (28); and/or
- in the return position, to open the through-passage from the spreading channel (24) into the material return flow region (28).

8. Distributor head (10) according to claim 7,
**characterized in that** the spreading channel (24) and the air discharge flow region (26) are pneumatically connected to one another in a lasting and/or permanent manner.

9. Distributor head (10) according to claim 7 or claim 8,
**characterized in that** the deflection body (40) of the deflection device (38) is designed, in the feed-through position, to reduce the open flow cross section in the through-passage from the spreading channel (24) into the air discharge flow region (26).

10. Agricultural spreading machine (100), in particular seed drill, comprising
- a distributor head (10) for distributing granular material to a plurality of spreading lines (110); and
- a plurality of depositing devices (104) which are each connected to a spreading line (110) and are designed to deposit granular material onto an agricultural area;
**characterized in that** the distributor head (10) is designed according to any of the preceding claims.

## Revendications

1. Tête de distribution (10) pour une machine d'épandage agricole (100), comportant
- une conduite d'acheminement principale (12), par l'intermédiaire de laquelle un matériau granulaire peut être conduit vers une zone de distribution (22) de la tête de distribution (10) ;
- plusieurs canaux d'épandage (24) qui partent de la zone de distribution (22) et par l'intermédiaire desquels le matériau granulaire peut être conduit vers des conduites d'épandage (110) menant à des dispositifs de dépôt (104) ; et
- plusieurs dispositifs de retour (14) qui comprennent respectivement une zone d'écoulement de retour de matériau (28) et une zone d'écoulement d'évacuation d'air (26), dans laquelle le matériau granulaire peut être envoyé en retour depuis un canal d'épandage (24) vers la conduite d'acheminement principale (12) par la zone d'écoulement de retour de matériau (28) par l'intermédiaire d'un écoulement de retour, et l'air séparé d'un écoulement de retour peut être amené vers un canal d'épandage (24) et/ou une conduite d'épandage (110) par la zone d'écoulement d'évacuation d'air (26) ;
dans laquelle la zone d'écoulement de retour de matériau (28) et la zone d'écoulement d'évacuation d'air (26) des dispositifs de retour (14) respectifs sont reliées l'une à l'autre pneumatiquement le long d'une voie de séparation (30) de telle sorte que l'air provenant d'un écoulement de retour traversant la zone d'écoulement de retour de matériau (28) peut être séparé le long de la voie de séparation (30) dans la zone d'écoulement d'évacuation d'air (26),
**caractérisée en ce que** la zone d'écoulement de retour de matériau (28) entoure, au moins dans certaines sections, en particulier en spirale, la zone d'écoulement d'évacuation d'air (26).

2. Tête de distribution (10) selon la revendication 1,
**caractérisée en ce que** la zone d'écoulement de retour de matériau (28) et la zone d'écoulement d'évacuation d'air (26) des dispositifs de retour (14) respectifs sont délimitées l'une par rapport à l'autre sans paroi le long de la voie de séparation (30).

3. Tête de distribution (10) selon l'une des revendications précédentes,
**caractérisée en ce que** la section transversale d'écoulement de la zone d'écoulement d'évacuation d'air (26) est plus grande que la section transversale d'écoulement du canal d'épandage (24) et/ou la section transversale d'écoulement de la conduite d'épandage (110).

4. Tête de distribution (10) selon l'une des revendications précédentes,
**caractérisée en ce que** la zone d'écoulement de retour de matériau (28) et la zone d'écoulement d'évacuation d'air (26) s'étendent dans certaines sections le long de sections de conduites (32, 34) distinctes.

5. Tête de distribution (10) selon l'une des revendications précédentes,
**caractérisée par** une zone de collecte de retour (36), en particulier périphérique, qui est reliée à la conduite d'acheminement principale (12) et dans laquelle débouchent plusieurs ou l'ensemble des zones d'écoulement de retour de matériau (28).

6. Tête de distribution (10) selon la revendication 5,
**caractérisée en ce que** les zones d'écoulement de retour de matériau (28) débouchent en biais dans la zone de collecte de retour (36), de sorte qu'un écoulement de matériau en forme de tourbillon se forme de préférence dans la zone de collecte de retour (36).

7. Tête de distribution (10) selon l'une des revendications précédentes,
**caractérisée par** un dispositif de renvoi (38) qui peut être amené dans une position de passage et dans une position de retour, dans laquelle un corps de renvoi (40) mobile du dispositif de renvoi (38) est conçu pour
- dans la position de passage, bloquer un passage entre le canal d'épandage (24) et la zone d'écoulement de retour de matériau (28) ; et/ou
- dans la position de retour, permettre le passage entre le canal d'épandage (24) et la zone d'écoulement de retour de matériau (28).

8. Tête de distribution (10) selon la revendication 7,
**caractérisée en ce que** le canal d'épandage (24) et la zone d'écoulement d'évacuation d'air (26) sont reliés l'un à l'autre pneumatiquement de manière durable et/ou permanente.

9. Tête de distribution (10) selon la revendication 7 ou 8,
**caractérisée en ce que** le corps de renvoi (40) du dispositif de renvoi (38) est conçu pour, dans la position de passage, réduire la section transversale d'écoulement libre dans le passage entre le canal d'épandage (24) et la zone d'écoulement d'évacuation d'air (26).

10. Machine agricole d'épandage (100), en particulier semoir, comportant
- une tête de distribution (10) permettant de distribuer un matériau granulaire entre plusieurs conduites d'épandage (110) ; et
- plusieurs dispositifs de dépôt (104) qui sont respectivement reliés à une conduite d'épandage (110) et sont conçus pour déposer le matériau granulaire sur une surface agricole utile ;
**caractérisée en ce que** la tête de distribution (10) est réalisée selon l'une des revendications précédentes.
